(19) Europäisches Patentamt / European Patent Office / Office européen des brevets

(11) **EP 4 764 609 A1**

(12) **DEMANDE DE BREVET EUROPEEN**

(43) Date de publication:
   **24.06.2026 Bulletin 2026/26**

(21) Numéro de dépôt: **25224118.7**

(22) Date de dépôt: **16.12.2025**

(51) Classification Internationale des Brevets (IPC):
   ***G01S 17/931*** *(2020.01)*   ***G01S 7/48*** *(2006.01)*
   ***G01S 7/487*** *(2006.01)*

(52) Classification Coopérative des Brevets (CPC):
   **G01S 17/931; G01S 7/4808; G01S 7/4876**

(84) Etats contractants désignés:
   **AL AT BE BG CH CY CZ DE DK EE ES FI FR GB GR HR HU IE IS IT LI LT LU LV MC ME MK MT NL NO PL PT RO RS SE SI SK SM TR**
   Etats d'extension désignés:
   **BA**
   Etats de validation désignés:
   **GE KH LA MA MD TN**

(30) Priorité: **20.12.2024 FR 2414869**

(71) Demandeur: **Ampere SAS**
   **92100 Boulogne-Billancourt (FR)**

(72) Inventeurs:
   • **FRUTOS, Victoria**
     **28108 Madrid (ES)**
   • **MARTINEZ, Nuria**
     **28108 Madrid (ES)**
   • **RIVAS, Patricia**
     **28108 Madrid (ES)**
   • **VALVERDE, Paloma**
     **28108 Madrid (ES)**

(74) Mandataire: **Renault Group**
   **1, avenue du Golf**
   **FR TCR AVA 4 4C**
   **78084 Guyancourt Cedex (FR)**

(54) **PROCÉDÉ DE DÉTECTION D'UN ENVIRONNEMENT D'UN VÉHICULE**

(57) L'invention concerne un procédé de détection (1) de l'environnement d'un véhicule, comprenant :
- une étape d'acquisition (2) d'un nuage de points (NP) de l'environnement dudit véhicule (17) ;
- une étape de filtration (4) du nuage de points (NP) afin de former un nuage de points filtré (NF) ;
- une étape de division (6) du nuage de points filtré (NF) en des zones distinctes (Z) ;
- une étape de détermination (8) d'une densité en points (D) au sein de chaque zone (Z) et de calcul d'une densité moyenne ($\overline{D}$) des zones ;
- une étape de sélection (10), dans laquelle au moins une des zones (Z) est sélectionnée lorsque sa densité en points (D) est supérieure à la densité moyenne (D) ;
- une étape de traitement (12) de la région circulaire centrale (RC) puis une étape d'analyse (14) de l'au moins une zone sélectionnée (ZS) afin de détecter la présence d'objets, un temps d'exécution (T) de l'étape de traitement (12) et de l'étape d'analyse (14) étant mesuré, et l'étape d'analyse (14) étant interrompue lorsque ce temps d'exécution (T) dépasse un niveau maximum (T1).

[fig 2]

EP 4 764 609 A1

**Description**

La présente invention concerne le domaine des véhicules et, plus particulièrement, le domaine des procédés de détection d'un environnement autour d'un véhicule.

Les véhicules modernes, notamment ceux dotés d'un degré élevé d'autonomie, tels que les véhicules autonomes ou semi-autonomes, doivent être capables de percevoir et de comprendre leur environnement pour permettre une conduite en toute sécurité et un respect du code de la route.

À cet effet, il est nécessaire de disposer d'informations précises sur l'environnement autour du véhicule, notamment d'informations sur la présence d'objets tels que des infrastructures routières ou d'autres obstacles environnementaux, que ces objets soient statiques ou dynamiques.

Dans cette optique, les véhicules peuvent ainsi utiliser un procédé de détection de l'environnement. Ce type de procédé utilise souvent une technologie permettant de former un ou plusieurs nuages de points permettant de modéliser l'environnement autour du véhicule. Une technologie couramment utilisée dans ce domaine est la télédétection laser, connue sous son acronyme anglais LIDAR.

Le ou les nuages de points ainsi produits permettent une représentation détaillée de l'environnement. Cependant, lorsque l'environnement contient de nombreux obstacles, le ou les nuages de points peuvent présenter une forte densité en points, ce qui peut poser des problèmes lors d'une analyse subséquente du nuage de points à la recherche d'objets dans l'environnement.

En effet, une densité en points trop importante peut allonger le temps d'analyse, ce qui risque d'entraîner une détection tardive de certains objets et peut alors engendrer un risque accru d'accidents.

Afin de résoudre cette problématique, certains procédés de l'art antérieur cherchent à éliminer des points parasites du nuage de points en appliquant une méthode de génération de voisinage qui évalue la concentration de points autour d'un point donné pour déterminer si celui-ci fait partie d'un objet ou s'il s'agit d'un point parasite.

L'objectif de l'invention décrite ci-dessous est de proposer une alternative au procédé existant en présentant un procédé plus simple et plus rapide à mettre en œuvre. L'invention divise le nuage de points en zones distinctes, ces zones étant ensuite analysées par ordre de priorité, en fonction de leur densité en points. Le procédé proposé permet ainsi de réduire le temps d'exécution de l'analyse tout en maintenant une précision suffisante de ladite analyse, et ce, sans recourir à des méthodes de génération de voisinage.

La présente invention a ainsi pour principal objet un procédé de détection de l'environnement d'un véhicule, comprenant les étapes suivantes :

- une étape d'acquisition d'un nuage de points de l'environnement dudit véhicule ;
- une étape de filtration du nuage de points afin de former un nuage de points filtré, ladite étape de filtration comprenant au moins une élimination des points du nuage de points correspondant au sol de l'environnement ;
- une étape de division du nuage de points filtré en des zones distinctes ;
- une étape de détermination d'une densité en points au sein de chaque zone et de calcul d'une densité moyenne des zones ;
- une étape de sélection, dans laquelle la densité en points de chaque zone est comparée à la densité moyenne des zones, au moins une des zones étant sélectionnée lorsque sa densité en points est supérieure à la densité moyenne ;
- une étape d'analyse de l'au moins une zone sélectionnée pour détecter la présence d'objets.

L'étape d'acquisition du nuage de points est une étape au cours de laquelle des données concernant l'environnement du véhicule sont obtenues. Ces données sont ensuite structurées sous la forme d'un nuage de points constituant un ensemble de coordonnées tridimensionnelles permettant ainsi de modéliser l'environnement du véhicule. Chaque point correspond ainsi à une coordonnée indiquant la position d'une surface ou d'une partie d'un objet dans l'espace.

L'étape de filtration du nuage de points permet d'obtenir, à partir du nuage de points acquis lors de l'étape d'acquisition, le nuage de points filtré qui ne contient plus, ou très peu, de points correspondant au sol de l'environnement. Pour ce faire, l'étape de filtration comprend l'élimination des points associés au sol de l'environnement. Cette filtration peut être réalisée en identifiant et en séparant les points correspondant au sol des autres points, par exemple en mesurant la hauteur relative des points.

Le nuage de points filtré est ensuite divisé en zones distinctes lors de l'étape de division, par exemple en au moins deux zones distinctes, bien qu'il soit possible d'en définir davantage. Cette division en zones permet d'organiser le nuage de points filtré afin de faciliter son traitement ultérieur. À titre d'exemple non limitatif, les zones peuvent être formées par une division du nuage de points filtré en régions circulaires et/ou en secteurs angulaires disposées autour du véhicule.

L'étape de détermination consiste à mesurer la densité en points au sein de chaque zone. En d'autres termes, le nombre de points contenus dans chaque zone est compté, permettant ainsi d'établir une densité en points pour chaque zone.

Au cours de cette étape de détermination, la densité moyenne des zones est également déterminée. Cette densité moyenne est calculée comme la somme des densités en points de toutes les zones, divisée par le nombre total de zones formées lors de l'étape de division.

L'étape de sélection consiste à classer les zones en fonction de leur densité en points. La ou les zones ayant une densité en points supérieure à la densité moyenne sont sélectionnées, car elles présentent une probabilité plus élevée de contenir un objet. En revanche, la ou les zones dont la densité en points est inférieure à la densité moyenne sont écartées, car elles sont moins susceptibles de contenir un objet. Ainsi, cette étape divise les zones en deux groupes : un premier groupe comprenant la ou les zones sélectionnées et un second groupe comprenant la ou les zones écartées.

Enfin, l'étape d'analyse permet d'examiner les points contenus dans l'au moins une zone sélectionnée afin de détecter la présence d'objets. Cette étape d'analyse peut comprendre une évaluation de la concentration des points dans la ou les zones sélectionnées, une concentration élevée de points étant interprétée comme une indication probable de la présence d'un objet, tandis qu'une concentration faible suggère l'absence d'un objet. Il convient de noter que le procédé selon l'invention prévoit que, dans le cas où plusieurs zones sont sélectionnées, il est possible que toutes ne soient pas analysées, notamment lorsque des contraintes, telles que la durée de l'étape d'analyse, limitent ladite analyse.

De préférence, à l'étape d'analyse, les zones sélectionnées sont traitées par ordre décroissant de leur densité de points. Ainsi, si toutes les zones sélectionnées ne sont pas analysées, les zones de plus haute densité de points auront pu être analysées.

Selon une caractéristique optionnelle de l'invention, au cours de l'étape de division, le nuage de points filtré est divisé en régions circulaires afin de former lesdites zones.

Plus précisément, le nuage de points filtré est divisé en au moins deux régions circulaires. Ces régions circulaires peuvent entourer le véhicule et peuvent être concentriques entre elles.

À titre d'alternative, le nuage de points filtré peut être divisé en régions irrégulières entourant le véhicule. Par régions irrégulières, il convient de comprendre des régions non circulaires entourant le véhicule, qu'elles présentent une forme angulaire ou sinusoïdale.

Selon l'invention, au cours de l'étape de division, le nuage de points filtré est divisé en une région circulaire centrale et en au moins une région circulaire périphérique entourant la région circulaire centrale afin de former lesdites zones.

En d'autres termes, la région circulaire centrale et l'au moins une région circulaire périphérique sont concentriques entre elles. L'au moins une région circulaire périphérique entoure ainsi la région circulaire centrale qui, à titre d'exemple, peut inclure le véhicule.

À titre d'exemple non limitatif, les diamètres des régions circulaires, lorsqu'elles sont concentriques, peuvent être définis par la suite mathématique suivante : $Dn = 2r + (n-1)r$

où $r$ représente le rayon de la région circulaire centrale, et $n$ est un indice permettant de différencier les régions circulaires entre elles. Ainsi, $n = 1$ correspond à la région circulaire centrale, et $n = 2$ à une région circulaire périphérique entourant directement la région circulaire centrale.

Selon l'invention, le procédé comprend une étape de traitement de la région circulaire centrale afin de détecter la présence d'objets, ladite étape de traitement étant préalable à l'étape d'analyse.

Ainsi, on va d'abord détecter la présence d'objets dans la région circulaire centrale (étape de traitement), puis dans une ou plusieurs zones sélectionnées comme décrit ci-dessus (étape d'analyse).

Cette étape de traitement est donc effectuée avant l'étape d'analyse et permet de traiter , c'est-à-dire d'analyser, les points présents dans la région circulaire centrale afin de détecter la présence d'objets. Ainsi, indépendamment du fait que la ou les zones contenues dans la région circulaire centrale soient sélectionnées ou écartées, l'étape de traitement est réalisée. On garantit ainsi la détection d'objet dans un périmètre très proche du véhicule, quel que soit le nombre de points présents dans ce périmètre.

Cette étape de traitement permet donc au procédé de l'invention d'analyser les points contenus dans la région circulaire centrale, qu'ils fassent partie de zones sélectionnées ou écartées, afin d'examiner correctement l'environnement immédiat du véhicule pour réduire les risques liés à la conduite.

L'étape d'analyse a ensuite lieu et consiste à examiner les zones sélectionnées qui n'ont pas été traitées lors de l'étape de traitement.

Selon une caractéristique optionnelle de l'invention, au cours de l'étape de division, le nuage de points filtré est divisé en secteurs angulaires environnants le véhicule afin de former les zones.

Par secteur angulaire, on entend des parties de l'environnement du véhicule, pouvant correspondre, par exemple, à une partie avant ou arrière de l'environnement du véhicule.

À titre d'exemple, les secteurs angulaires peuvent être définis par des droites délimitant les différentes parties de l'environnement.

Il convient de préciser que les secteurs angulaires et les régions circulaires peuvent être combinés afin de former les zones.

Selon une caractéristique optionnelle de l'invention, au cours de l'étape de division, le nuage de points filtré est divisé afin de former les zones, en au moins :

- un secteur angulaire avant du véhicule,

- un secteur angulaire arrière du véhicule,

- deux secteurs angulaire latéraux du véhicule.

Le secteur angulaire avant du véhicule correspond à l'environnement situé à l'avant du véhicule. La ou les zones contenues dans ce secteur angulaire avant sont particulièrement pertinentes à analyser, notamment en cas de conduite à grande vitesse, afin de réagir rapidement à tout obstacle se trouvant sur la trajectoire du véhicule.

Le secteur angulaire arrière correspond à l'environnement situé à l'arrière du véhicule. La ou les zones contenues dans ce secteur angulaire arrière sont particulièrement utiles à analyser lors de manœuvres du véhicule, par exemple en marche arrière ou lorsque le véhicule doit s'arrêter ou décélérer.

Les deux secteurs angulaires latéraux correspondent à l'environnement situé sur les côtés latéraux du véhicule. La ou les zones contenues dans ces secteurs angulaires latéraux sont particulièrement intéressantes à analyser lors de changements de voie du véhicule ou pour la surveillance des autres voies de circulation.

Selon l'invention, un temps d'exécution de l'étape de traitement et de l'étape d'analyse est mesuré, l'étape d'analyse étant interrompus lorsque ce temps d'exécution dépasse un niveau maximum.

L'interruption de l'étape d'analyse permet de mettre en œuvre une nouvelle étape de traitement et une nouvelle étape d'analyse sur la base d'un nouveau nuage de points. Ainsi, l'interruption de l'étape d'analyse permet de s'assurer d'une vitesse minimale de rafraichissement dans le traitement des données. On évite ainsi de détecter trop tardivement un danger, en raison d'une durée totale d'analyse de chaque nuage de points trop longue.

En particulier, pour chaque nuage de points, on choisit de ne pas forcément analyser tous les points du nuage, afin de conserver une durée acceptable de traitement de chaque nuage de points.

Afin de garantir une détection la plus efficace possible, les zones de points sont analysées par ordre décroissant de leur pertinence. De préférence, on démarre par les points situés dans une région centrale autour du véhicule, puis on continue par les zones périphériques par ordre décroissant de leur densité de points, considérant que plus la densité de points est élevée, plus la zone est encombrée de potentiels obstacles.

Le temps d'exécution correspond au temps que dure l'étape de traitement et l'étape d'analyse. En d'autres termes, il s'agit de la durée écoulée entre le début de l'étape de traitement et le moment présent, que ce soit lors de l'étape de traitement ou de l'étape d'analyse.

À titre d'exemple, si l'on se trouve encore à l'étape de traitement, le temps d'exécution correspond à la durée écoulée depuis le début de cette étape de traitement jusqu'au moment présent. Si l'on se trouve à l'étape d'analyse, le temps d'exécution correspond à la durée de l'étape de traitement, additionnée à la durée écoulée depuis le début de l'étape d'analyse jusqu'au moment présent.

Lorsque le temps d'exécution devient trop long, c'est-à-dire lorsqu'il dépasse le niveau maximum, l'étape d'analyse peut être interrompue. En effet, le procédé selon l'invention permet d'éviter que le temps d'exécution ne soit excessif, ce qui pourrait nuire au traitement d'autres nuages de points et, par conséquent, entraîner des problèmes de détection d'objets dans l'environnement.

De préférence, après ladite interruption, une nouvelle étape de traitement et une nouvelle étape d'analyse sont mises en œuvre sur la base d'un nouveau nuage de points.

En particulier, le procédé comprend alors une nouvelle étape d'acquisition d'un nuage de points, une nouvelle étape de filtration du nuage de points, une nouvelle étape de division du nuage de points filtrés, une nouvelle étape de détermination d'une densité de points, une nouvelle étape de sélection, une nouvelle étape de traitement, et une nouvelle étape d'analyse. La nouvelle étape de traitement et la nouvelle étape d'analyse sont mises en œuvre après ladite interruption. En revanche, les autres nouvelles étapes peuvent être mises en œuvre avant ladite interruption, en parallèle d'une étape de traitement ou d'analyse associée à une précédente acquisition d'un nuage de points.

Selon une caractéristique optionnelle de l'invention, l'interruption de l'étape d'analyse est conditionnée à un nombre de zones analysées.

Il convient de noter que l'interruption de l'étape d'analyse, lorsqu'un temps d'exécution trop long est observé, dépend du nombre de zones analysées au cours de l'étape de traitement et de l'étape d'analyse. Lorsque le nombre de zones analysées est suffisant, c'est-à-dire qu'il dépasse un seuil, l'étape d'analyse peut être interrompue en toute sécurité, car un nombre adéquat de zones a été analysé, offrant ainsi une vision suffisamment précise de l'environnement du véhicule.

En revanche, si le nombre de zones analysées est insuffisant, c'est-à-dire inférieur au seuil, l'étape d'analyse n'est pas interrompue, car un nombre trop faible de zones a été analysé, ce qui ne permet pas d'obtenir une idée suffisamment précise de l'environnement.

Selon une caractéristique optionnelle de l'invention, le procédé comprend une étape d'analyse complémentaire d'au moins une zone écartée lors de l'étape de sélection afin de détecter la présence d'objets au sein de cette zone écartée, ladite étape d'analyse complémentaire étant effectuée lorsque le temps d'exécution est inférieur à un niveau minimum.

De manière avantageuse, les zones sélectionnées et écartées sont traitées une à une dans l'étape d'analyse puis le cas échéant l'étape d'analyse complémentaire, par ordre décroissant de leur densité de point, et jusqu'à ce que le temps d'exécution ait atteint une valeur seuil prédéterminé. Lorsque le temps d'exécution a atteint ladite valeur seuil prédéterminée, l'étape d'analyse, respectivement l'étape d'analyse complémentaire, est interrompue afin de pouvoir passer au traitement d'un nouveau nuage de points.

Cette analyse complémentaire permet ainsi d'examiner les points contenus dans la ou les zones écartées lors de l'étape de sélection à la recherche d'objets. Cette étape complémentaire est réalisée uniquement lorsque le temps d'exécution est inférieur au niveau minimum, ce qui signifie qu'il reste suffisamment de temps pour effectuer l'analyse complémentaire.

Ainsi, cette analyse complémentaire permet, lorsque le temps disponible le permet, de poursuivre l'analyse sur les zones écartées afin d'obtenir une modélisation de l'environnement plus complète qu'avec uniquement l'analyse des zones sélectionnées.

Selon une caractéristique optionnelle de l'invention, le niveau minimum est égal à la moitié du niveau maximum.

L'invention concerne également, un système de détection de l'environnement d'un véhicule mettant en œuvre le procédé tel que décrit dans le présent document.

Le système de détection peut comporter différents modules, chacun étant responsable d'une ou plusieurs étapes du procédé.

À titre d'exemple non limitatif, le système de détection peut comprendre notamment un module d'acquisition permettant l'acquisition du nuage de points. Ce module d'acquisition peut notamment utiliser une technologie de télédétection laser (LIDAR).

Le système de détection peut également comprendre d'autres modules, par exemple un module de filtration permettant de filtrer le nuage de points pour obtenir un nuage de points filtré. Le système peut également comporter un module d'analyse, responsable de l'étape de division, de l'étape de détermination, de l'étape d'analyse, mais aussi de l'étape de traitement et de l'étape d'analyse complémentaire. Ces modules peuvent faire partie d'une unité électronique de contrôle embarquée sur le véhicule.

L'invention concerne enfin un programme d'ordinateur comprenant des instructions de code de programme pour l'exécution des étapes du procédé de détection selon l'invention, lorsque ledit programme est exécuté sur un ou plusieurs processeurs.

D'autres caractéristiques, détails et avantages de l'invention ressortiront plus clairement à la lecture de la description qui suit d'une part, et d'exemples de réalisation donnés à titre indicatif et non limitatif en référence aux dessins annexés d'autre part, sur lesquels :

[Fig. 1] est une représentation schématique d'un procédé de détection d'un environnement d'un véhicule.

[Fig. 2] est une représentation schématique de zones formées lors d'une étape de division du procédé de détection selon l'invention.

[Fig. 3] est un logigramme illustrant des conditions d'arrêt d'une étape d'analyse du procédé selon l'invention ainsi que des conditions déclenchant une activation d'une étape d'analyse complémentaire du procédé selon l'invention.

[Fig. 4] est une représentation schématique d'un système de détection mettant en œuvre le procédé de détection selon l'invention.

Les caractéristiques et les variantes de l'invention peuvent être associées les unes avec les autres, selon diverses combinaisons, dans la mesure où elles ne sont pas incompatibles ou exclusives les unes par rapport aux autres. On pourra notamment imaginer des variantes de l'invention ne comprenant qu'une sélection de caractéristiques décrites ci-après de manière isolée des autres caractéristiques décrites, si cette sélection de caractéristiques est suffisante pour conférer un avantage technique et/ou pour différencier l'invention par rapport à l'état de la technique antérieur.

Sur les figures, les éléments communs à plusieurs figures conservent la même référence.

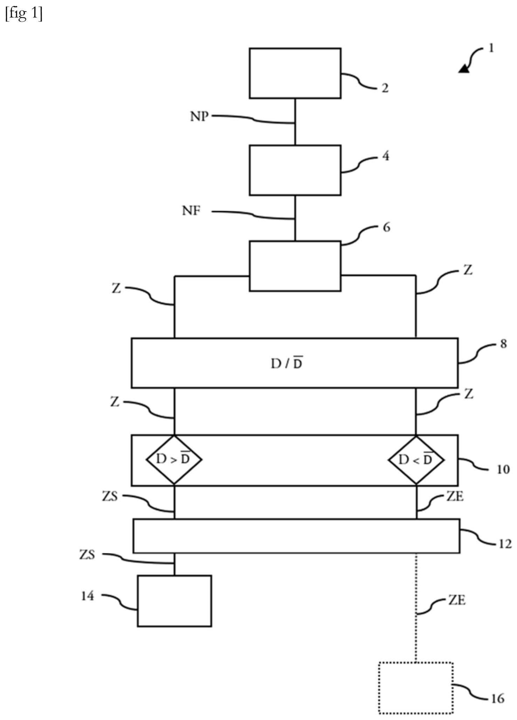

La figure 1 est une représentation schématique d'un procédé de détection 1 d'un environnement d'un véhicule.

Ce procédé de détection 1 comprend une pluralité d'étapes permettant une analyse de l'environnement à proximité du véhicule à la recherche d'un ou plusieurs objets. Dans le mode de réalisation décrit, ces étapes sont exécutées de manière successive ; toutefois, dans d'autres modes de réalisation, elles pourraient être réalisées dans un ordre différent.

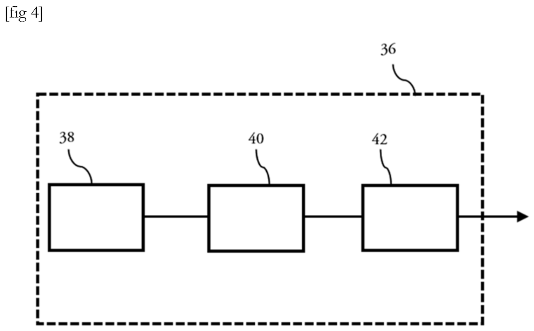

La première étape de ce procédé de détection 1 est une étape d'acquisition 2 d'un nuage de points NP de l'environnement du véhicule, ladite étape d'acquisition 2 peut être effectuée par un système de détection tel que cela sera décrit en référence avec la figure 4.

Lors de cette étape d'acquisition 2, les données acquises sur l'environnement sont transformées en données structurées, plus particulièrement sous la forme du nuage de points NP.

Le nuage de points NP est ainsi un ensemble de points, c'est-à-dire un ensemble de coordonnées tridimensionnelles permettant de modéliser la géométrie de l'environnement du véhicule. Chaque point correspond donc à une mesure de la position d'une surface ou d'un objet dans l'espace, permettant ainsi de capturer la structure détaillée de l'environnement. Ce nuage de points NP permet ainsi d'analyser des volumes, d'identifier des formes ou d'effectuer des calculs de trajectoires.

La deuxième étape de ce procédé de détection 1 est une étape de filtration 4 du nuage de points NP acquis lors de l'étape d'acquisition 2. Lors de cette étape de filtration 4, les points du nuage de points NP correspondant au sol de l'environnement sont filtrés de sorte à obtenir un nuage de points filtré NF où les points correspondant au sol sont éliminés.

À cet égard, le procédé de détection 1 peut examiner les points constituant le nuage de point NP et les catégoriser afin de déterminer s'ils correspondent au sol, avant de les éliminer le cas échéant. Par exemple, le système peut comparer une hauteur des points du nuage de points NP et éliminer les points ayant une hauteur trop basse, qui correspondrait donc à des points résultant du sol.

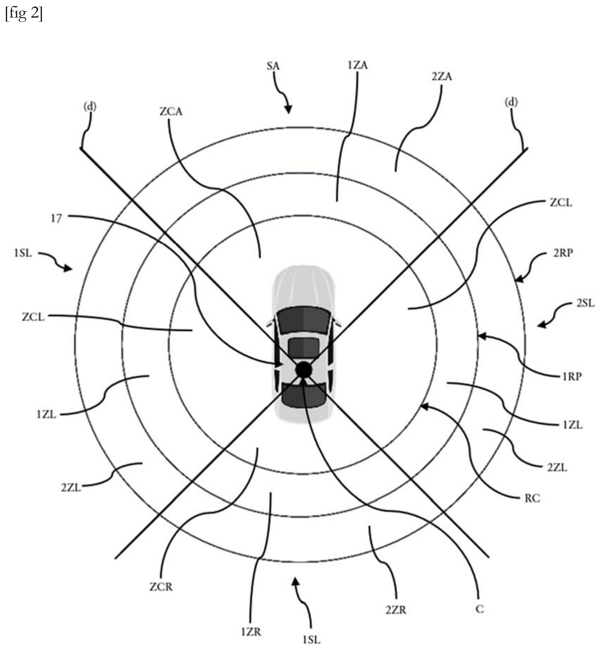

La troisième étape de ce procédé de détection 1 est une étape de division 6 du nuage de points filtré NF en des zones distinctes Z pouvant contenir ou non des points. À cette fin, le nuage de points filtré NF peut, à titre d'exemple non limitatif, être séparé en régions circulaires et en secteurs angulaires, permettant ainsi de former lesdites zones Z, comme cela sera détaillé en lien avec la figure 2. Plus particulièrement, le nuage de points filtré NF peut être séparé en une région circulaire centrale et en au moins une région circulaire périphérique l'entourant, de sorte que la région circulaire centrale et l'au moins une région circulaire périphérique sont des régions circulaires concentriques entres elles.

Il convient de noter que, sur la représentation schématique de la figure 1, le nuage de points filtré NF semble être divisé uniquement en deux zones distinctes Z. Cette représentation est toutefois schématique afin de mieux comprendre le procédé de détection 1 selon l'invention. Il convient ainsi de noter que le nuage de points filtré NF peut être divisé en plus de deux zones distinctes Z, comme cela sera décrit en rapport avec la figure 2.

Cette délimitation en zones Z permet l'analyse du nuage de points filtré NF par priorité, en se concentrant sur les zones Z qui contiennent le plus de points et en passant moins de temps sur des zones Z qui ne contiennent pas ou peu de points.

Une fois le nuage de points filtré NF séparé en zones distinctes Z, une quatrième étape du procédé de détection 1 est une étape de détermination 8 de la densité en points D de chacune de ces zones Z et de calcul d'une densité moyenne $\overline{D}$ des zones Z.

Durant cette étape de détermination 8, la densité en points D de chaque zone Z est déterminée, de sorte que l'on obtienne une densité en points D pour chaque zone Z formée lors de l'étape de division 6. En outre, durant cette étape de détermination 8, la densité moyenne $\overline{D}$ des zones Z est calculée, ce qui permet d'obtenir une seule valeur de densité moyenne D. Cette densité moyenne D correspond à la moyenne des densités en points D déterminées des zones Z.

La cinquième étape, est une étape de sélection 10 des zones Z. Au cours de cette étape de sélection 10, au moins une des zones Z est sélectionnée en fonction de sa densité en points D. L'objectif de cette étape de sélection 10 est ainsi d'identifier les zones Z présentant la plus grande concentration de points, car ce sont généralement ces zones Z qui présentent un risque accru d'abriter des objets dans l'environnement du véhicule.

Afin de réaliser cette étape de sélection 10, les données déterminées et calculées lors de l'étape précédente sont utilisées. Plus précisément, la densité en points D de chaque zone Z est comparée à la densité moyenne $\overline{D}$ calculée lors de l'étape de détermination 8. En fonction de cette comparaison, les zones Z sont soit sélectionnées, soit écartées. Ainsi, la ou les zones Z dont la densité en points D est supérieure à la densité moyenne $\overline{D}$ sont sélectionnées, tandis que celle ou celles ayant une densité en points D inférieure à la densité moyenne $\overline{D}$ sont écartées.

En d'autres termes, lors de l'étape de sélection 10, les zones Z sont réparties en deux groupes : la ou les zones sélectionnées ZS, avec une densité en points D supérieure à la densité moyenne D, et la ou les zones écartées ZE, avec une densité en points D inférieure à la densité moyenne $\overline{D}$.

La sixième étape est une étape de traitement 12 de la région circulaire centrale, précédemment définie et visible dans la figure 2. Cette étape de traitement 12 permet d'analyser les points présents dans la région circulaire centrale afin de détecter la présence d'objets au sein de ladite région circulaire centrale.

L'étape de traitement 12 est effectuée indépendamment du fait que la ou les zones Z contenues dans la région circulaire centrale aient été sélectionnées ou écartées lors de l'étape de sélection 10. En effet, l'étape de traitement 12 est réalisée systématiquement sur la région circulaire centrale, car elle est la région la plus proche du véhicule. Il est donc intéressant de procéder à une analyse précise des points dans cette région afin de détecter d'éventuels objets et ainsi prévenir tout risque d'accident.

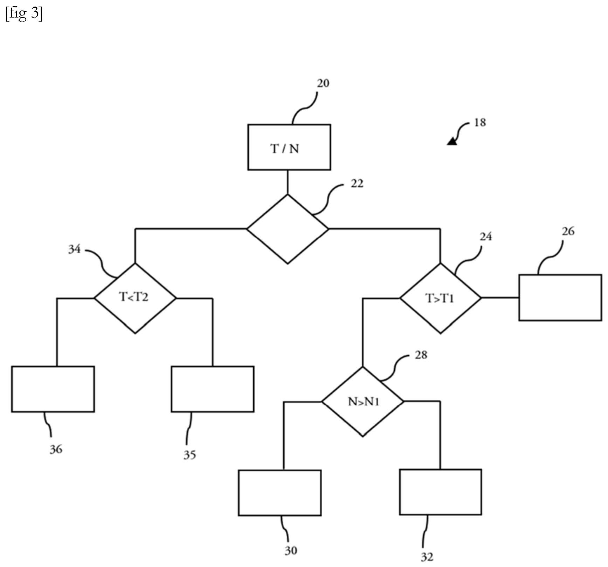

La septième étape est une étape d'analyse 14 de l'au moins une zone sélectionnée. Lors de cette étape d'analyse 14, les points présents dans la ou les zones sélectionnées ZS sont analysés afin de détecter la présence d'objets. Étant donné que plusieurs zones Z peuvent être sélectionnées, l'analyse peut porter soit sur l'ensemble des zones sélectionnées ZS, soit uniquement sur une partie des zones sélectionnées ZS, comme cela sera précisé en référence à la figure 3.

Une huitième étape du procédé de détection 1 est une étape d'analyse complémentaire 16, au cours de laquelle les points des zones écartées ZE lors de l'étape de sélection 10 sont examinés pour rechercher la présence d'objets dans ces zones écartées ZE. Cette analyse complémentaire est optionnelle, ce qui explique sa représentation en pointillée sur la figure 1.

L'étape d'analyse complémentaire 16 est réalisée dans certaines conditions, qui dépendent notamment d'un temps d'exécution des étapes de traitement et d'analyse, ainsi que d'un nombre de zones Z traités et/ou analysés au cours de ces étapes. Ces conditions seront détaillées dans la description de la figure 3.

La figure 2 est une représentation schématique des zones Z formées lors de l'étape de division 6 du procédé de détection 1 selon l'invention.

Comme indiqué précédemment, les zones Z sont formées au cours de l'étape de division 6, et dans ce mode de réalisation, sont définies par des régions circulaires concentriques et des secteurs angulaires. Plus particulièrement, les zones Z sont notamment formées par la région circulaire centrale RC et l'au moins une région circulaire périphérique entourant cette dernière.

Dans ce mode de réalisation, les zones Z sont formées par une pluralité de régions circulaires périphériques entourant la région circulaire centrale RC. En particulier, elles sont formées par une première région circulaire périphérique 1RP, qui est la région circulaire périphérique la plus proche du véhicule 17, et une deuxième région circulaire périphérique 2RP, qui est la région circulaire périphérique la plus éloignée du véhicule 17.

En d'autres termes, la région circulaire centrale RC, la première région circulaire périphérique 1RP et la deuxième région circulaire périphérique 2RP forment un ensemble de régions circulaires concentriques. La région circulaire centrale RC entoure le véhicule 17, la première région circulaire périphérique 1RP entoure la région circulaire centrale RC (et donc le véhicule 17), et la deuxième région circulaire périphérique 2RP entoure la première région circulaire périphérique 1RP, la région circulaire centrale RC, ainsi que le véhicule 17.

Il convient de noter que, dans d'autres modes de réalisation, les zones Z pourraient être constituées uniquement de régions circulaires (sans qu'elles soient nécessairement concentriques) ou exclusivement de secteurs angulaires.

Le diamètre des régions circulaires concentriques peut être défini par la suite mathématique suivante dans ce mode de réalisation :

$$\mathrm{D}n = 2r + (n-1)r$$

$r$ est une valeur fixe représentant le rayon de la région circulaire centrale RC. Cette valeur est définie en fonction de la taille de l'environnement du véhicule 17 dans lequel on souhaite détecter les objets.

Il convient de noter que la valeur du rayon $r$ peut dépendre notamment de la longueur de la voiture, de l'emplacement du LiDAR sur le véhicule, ainsi que des caractéristiques propres au LiDAR, telles que sa distance de détection minimale. Cette valeur de rayon r doit permettre d'assurer la détection d'un obstacle situé à au moins 0,5 m à l'avant et/ou à l'arrière du véhicule.

$n$ est un indice permettant de différencier la région circulaire centrale RC et les régions circulaires périphériques. Par exemple, dans ce mode de réalisation :

- $n = 1$ correspond à la région circulaire centrale RC,
- $n = 2$ correspond à la première région circulaire périphérique 1RP,
- $n = 3$ correspond à la deuxième région circulaire périphérique 2RP.

Ainsi, à titre d'exemple dans ce mode de réalisation :

- le diamètre de la région circulaire centrale RC est défini par la formule mathématique D = *2r,*
- le diamètre de la première région circulaire périphérique 1RP est défini par la formule mathématique D = *2r+r,*
- le diamètre de la deuxième région circulaire périphérique 2RP est défini par la formule mathématique D = *2r+r+r.*

Afin de former les zones Z, le nuage de points filtré NF est également divisé en secteurs angulaires. Plus particulièrement, ici, le nuage de points filtré NF est divisé en quatre secteurs angulaires : un secteur angulaire avant SA, un secteur angulaire arrière SR, un premier secteur angulaire latéral 1SL et un deuxième secteur angulaire latéral 2SL. Le premier secteur angulaire latéral 1SL est situé à gauche du véhicule 17, et le deuxième secteur angulaire latéral 2SL est situé à droite du véhicule 17 lorsque celui-ci est en marche avant.

Les secteurs angulaires peuvent, à titre d'exemple, être délimités par des droites (d), notamment par deux droites (d) perpendiculaires et sécantes entre elles. Ces deux droites (d) se croisent en un centre C du véhicule 17, de sorte que les espaces formés entre elles dans l'environnement du véhicule 17 constituent les secteurs angulaires.

Dans ce mode de réalisation, la région circulaire centrale RC et les quatre secteurs angulaires forment ainsi quatre zones centrales : une zone centrale avant ZCA, qui correspond à la zone Z de la région circulaire centrale RC comprise dans le secteur angulaire avant SA; une zone centrale arrière ZCR, qui est la zone Z de la région circulaire centrale RC comprise dans le secteur angulaire arrière SR ; et deux zones centrales latérales ZCL, qui correspondent aux zones Z de la région circulaire centrale RC comprises dans les deux secteurs angulaires latéraux 1SL, 2SL.

La première région circulaire périphérique 1RP et les quatre secteurs angulaires forment quant à eux quatre premières zones périphériques : une première zone périphérique avant 1ZA, qui est la zone de la première région circulaire périphérique 1RP comprise dans le secteur angulaire avant SA; une première zone périphérique arrière 1ZR, qui est la zone Z de la première région circulaire périphérique 1RP comprise dans le secteur angulaire arrière SR ; et deux premières zones périphériques latérales 1ZL, qui sont les zones Z de la première région circulaire périphérique 1RP comprises dans les deux secteurs angulaires latéraux 1SL, 2SL.

La deuxième région circulaire périphérique 2RP et les quatre secteurs angulaires forment à leur tour quatre deuxièmes zones périphériques : une deuxième zone périphérique avant 2ZA, qui est la zone Z de la deuxième région circulaire périphérique 2RP comprise dans le secteur angulaire avant SA ; une deuxième zone périphérique arrière 2ZR, qui est la zone Z de la deuxième région circulaire périphérique 2RP comprise dans le secteur angulaire arrière SR ; et deux deuxièmes zones périphériques latérales 2ZL, qui sont les zones Z de la deuxième région circulaire périphérique 2RP comprises dans les deux secteurs angulaires latéraux 1SL, 2SL.

Il convient de noter que, comme précisé précédemment, lors de l'étape de traitement 12, la présence d'objets dans la région circulaire centrale RC est recherchée en traitant les points de cette région, et donc en traitant les points compris dans : la zone centrale avant ZCA, la zone centrale arrière ZCR et les deux zones centrales latérales ZCL. Cette étape de traitement 12 est réalisée indépendamment de la sélection ou de l'exclusion de ces zones Z. En d'autres termes, les points de toutes les zones Z comprises dans la région circulaire centrale RC sont analysés avant l'étape d'analyse 14, puisque ce sont les zones où le risque d'accident est le plus élevé en présence d'objets.

Concernant les zones sélectionnées ZS présentes dans les régions périphériques, au moins une partie de ces zones sélectionnées ZS présentes dans les régions périphériques est analysée lors de l'étape d'analyse 14. En effet, selon certaines conditions décrites dans la description de la figure 3, elles peuvent ne pas être toutes analysées.

En ce qui concerne les zones écartées ZE présentes dans les régions périphériques, elles sont analysées au cours de l'étape d'analyse complémentaire 16, cette étape d'analyse 14 étant optionnelle et se déroulant dans certaines conditions, également décrites dans la description de la figure 3.

La figure 3 est un logigramme 18 illustrant les conditions d'arrêt de l'étape d'analyse 14 ainsi que les conditions déclenchant l'activation de l'étape d'analyse complémentaire 16.

Dans le premier bloc 20 du logigramme 18, et en parallèle avec l'étape de traitement 12 et l'étape d'analyse 14, le temps d'exécution T de ces deux étapes est mesuré, comme spécifié précédemment. Autrement dit, la durée combinée de l'étape de traitement 12 et de l'étape d'analyse 14 est considérée comme une seule et même période continue, et le temps total ainsi mesuré correspond audit temps d'exécution T.

En outre, toujours dans ce premier bloc 20, un nombre N de zones Z analysées et/ou traitées est déterminé. Ce nombre N fait référence au nombre de zones Z traitées durant l'étape de traitement 12 et au nombre de zones Z analysées durant l'étape d'analyse 14.

En d'autres termes, lorsque le procédé de détection 1 en est encore à l'étape de traitement 12, le nombre N correspond au nombre de zones Z traités durant ladite étape de traitement 12. En revanche, lorsque le procédé de détection 1 est à l'étape d'analyse 14, le nombre N représente le nombre de zone Z traités lors de l'étape de traitement 12, auquel s'ajoute le nombre de zones Z analysés lors de l'étape d'analyse 14.

Dans un deuxième bloc 22 du logigramme 18, on procède ensuite à la vérification de l'achèvement de l'analyse des zones sélectionnées ZS durant l'étape d'analyse 14. Lorsque l'analyse des zones sélectionnées ZS n'est pas encore terminée, un troisième bloc 24 du logigramme 18 compare le temps d'exécution T à un niveau maximum T1 de temps d'exécution T.

Dans le cas où le temps d'exécution T est inférieur à ce niveau maximum T1, cela indique que la durée de l'étape de traitement 12 et de l'étape d'analyse 14 reste raisonnable. L'étape d'analyse 14, et donc l'analyse des zones sélectionnées ZS, se poursuit alors dans un quatrième bloc 26 du logigramme 18.

En revanche, dans le cas où le temps d'exécution T dépasse ce niveau maximum T1, cela signifie que la durée des étapes de traitement et d'analyse est trop longue. Il convient alors de déterminer si l'étape d'analyse 14 peut être interrompue.

Pour ce faire, un cinquième bloc 28 du logigramme 18 conditionne l'arrêt de l'étape d'analyse 14 au nombre N de zones Z traités et/ou analysés.

Plus particulièrement, au sein de ce cinquième bloc 28 du logigramme 18, le nombre N est comparé à un seuil N1 de nombre de zones Z traitées et/ou analysées.

Lorsque le nombre N dépasse le seuil N1, cela indique que le nombre de zones Z traités et/ou analysés est suffisant pour offrir une vision suffisamment complète de l'environnement du véhicule 17. Dès lors, l'étape de traitement 12 et/ou d'analyse peut être arrêtée dans un sixième bloc 30 du logigramme 18.

En revanche, lorsque le nombre N est inférieur au seuil N1, cela signifie que les zones Z traités et/ou analysés ne permettent pas d'obtenir une vision suffisamment complète de l'environnement du véhicule 17. Dans ce cas, même lorsque le temps d'exécution T dépasse le niveau maximum T1, l'étape d'analyse 14 continue dans un septième bloc 32 du logigramme 18.

Dans le cas où, dans le deuxième bloc 22 du logigramme 18, on procède à la vérification de l'achèvement de l'analyse des zones sélectionnées ZS durant l'étape d'analyse 14, et que cette analyse est terminée, un huitième bloc 34 du logigramme 18 compare le temps d'exécution T à un niveau minimum T2 de temps d'exécution T. Ce niveau minimum T2 peut, par exemple, être égal à la moitié du niveau maximum T1.

Dans le cas où le temps d'exécution T est supérieur à ce niveau minimum T2, l'étape d'analyse complémentaire 16 n'est pas effectuée, comme l'indique un neuvième bloc 35 du logigramme 18.

En revanche, si le temps d'exécution T est inférieur à ce niveau minimum T2, l'étape d'analyse complémentaire 16 des zones écartées ZE lors de l'étape de sélection 10 est réalisée, comme l'indique un dixième bloc 36 du logigramme 18.

Pour résumer ce logigramme 18 :

- Lorsque l'étape d'analyse 14 n'est pas terminée et que le temps d'exécution T est inférieur au niveau maximum T1, l'étape d'analyse 14 se poursuit.
- Lorsque l'étape d'analyse 14 n'est pas achevée, que le temps d'exécution T dépasse le niveau maximum T1 et que le nombre N est inférieur au seuil N1, l'étape d'analyse 14 continue également.

- Dans le cas où l'étape d'analyse 14 n'est pas terminée, que le temps d'exécution T excède le niveau maximum T1 et que le nombre N dépasse le seuil N1, l'étape d'analyse 14 est arrêtée.

- Lorsque l'étape d'analyse 14 est achevée, mais que le temps d'exécution T est inférieur au niveau minimum T2, une analyse complémentaire est réalisée sur les zones écartées ZE.

- Dans le cas où l'étape d'analyse 14 est terminée et que le temps d'exécution T dépasse le niveau minimum T2, l'analyse complémentaire n'est pas effectuée.

La figure 4 est une représentation schématique d'un système de détection 36 mettant en œuvre le procédé de détection 1 selon l'invention.

Le système de détection 36 comprend tout d'abord un module d'acquisition 38. Ce module d'acquisition 38 permet d'effectuer l'étape d'acquisition 2 et ainsi de former le nuage de points NP représentant l'environnement du véhicule 17.

Pour cela, le module d'acquisition 38 peut utiliser la technologie de télédétection par laser (LiDAR). Il scanne alors son environnement grâce à un ensemble de lasers et de détecteurs, en envoyant des impulsions laser et en mesurant le délai, aussi appelé « temps de vol », entre l'émission des impulsions laser et la détection de ces impulsions réfléchies par un objet présent dans l'environnement.

Les mesures des impulsions laser émises qui rebondissent sur des objets et qui sont ensuite captées par le module d'acquisition 38 forment un bloc de données. Ce bloc de données est ensuite traité, et à l'aide des fichiers d'étalonnage, il est décrypté et converti en le nuage de points NP.

Le système de détection 36 peut également comprendre un module de filtration 40 conçu pour filtrer les points du nuage de points NP correspondant au sol, afin de produire le nuage de points filtré NF, où les points correspondant au sol de l'environnement sont éliminés.

Pour cela, ce module de filtration 40 reçoit le nuage de points NP produit par le module d'acquisition 38, segmente les points correspondant au sol de ceux qui ne le sont pas, puis publie le nuage de points filtré NF. À cette fin, il peut utiliser par exemple une approche segmentaire, où le nuage de points filtré NP est segmenté, chaque segment est analysé, et les points correspondant au sol sont supprimés, permettant ainsi de produire le nuage de points filtré NF.

Le système de détection 36 peut également inclure un module d'analyse 42. Ce module peut être configuré pour effectuer les autres étapes du procédé de détection 1 selon l'invention. Ainsi, le module d'analyse 42 peut être configuré pour effectuer l'étape de division 6 du nuage de points filtré NF, puis l'étape de détermination 8 de la densité en points D de chaque zone Z et de la densité moyenne D des zones Z, suivie de l'étape de sélection 10 des zones Z, et enfin l'étape d'analyse 14.

Le module d'analyse 42 peut également être configuré pour réaliser l'étape de traitement 12 et l'étape d'analyse complémentaire 16, ainsi que pour suivre le temps d'exécution T et le nombre N de zones Z traitées et/ou analysées.

Alternativement, toutes les étapes du procédé de détection 1 pourraient être réalisées dans un unique module. Les étapes du procédé de détection 1 pourraient également être réparties dans d'autres modules. L'exemple décrit dans la figure 4 est donc un exemple non limitatif de l'invention.

Il convient de noter que l'invention concerne également un programme d'ordinateur pouvant comprendre des instructions de code de programme pour l'exécution des étapes du procédé de détection 1 selon l'invention.

Le programme d'ordinateur peut notamment être exécuté sur un ou plusieurs processeurs.

Telle qu'elle vient d'être décrite, la présente invention atteint l'objectif qu'elle s'est fixé en proposant un procédé de détection de l'environnement d'un véhicule. Ce procédé génère un nuage de points filtré et comprend une étape de division de ce nuage de points filtré en zones distinctes. Les zones sont ensuite analysées par ordre de priorité en fonction de leur densité de points, ce qui permet de cibler la ou les zones les plus pertinentes pour la détection d'objets. Cette approche permet ainsi une détection rapide et efficace des objets présents dans l'environnement du véhicule et assure une conduite sécuritaire sans recourir à des méthodes de génération de voisinage.

La présente invention ne saurait toutefois se limiter aux moyens et configurations décrits et illustrés ici et elle s'étend également à tout moyen et toute configuration équivalente ainsi qu'à toute combinaison techniquement opérante de tels moyens.

## Revendications

1. Procédé de détection (1) de l'environnement d'un véhicule (17), comprenant les étapes suivantes :

   - une étape d'acquisition (2) d'un nuage de points (NP) de l'environnement dudit véhicule (17) ;
   - une étape de filtration (4) du nuage de points (NP) afin de former un nuage de points filtré (NF), ladite étape de filtration (4) comprenant au moins une élimination des points du nuage de points (NP) correspondant au sol de l'environnement ;
   - une étape de division (6) du nuage de points filtré (NF) en des zones distinctes (Z), dans laquelle le nuage de points filtré (NF) est divisé en une région circulaire centrale (RC) et en au moins une région circulaire périphérique (1RP, 2RP) entourant la région circulaire centrale (RC) ;
- une étape de détermination (8) d'une densité en points (D) au sein de chaque zone (Z) et de calcul d'une densité moyenne ($\overline{D}$) des zones ;
- une étape de sélection (10), dans laquelle la densité en points (D) de chaque zone (Z) est comparée à la densité moyenne ($\overline{D}$) des zones (Z), au moins une des zones (Z) étant sélectionnée lorsque cette densité en points (D) est supérieure à la densité moyenne (D) ;
- une étape de traitement (12) de la région circulaire centrale (RC) afin de détecter la présence d'objets, indépendamment de la sélection (10) des zones (Z) ; puis
- une étape d'analyse (14) de tout ou partie de l'au moins une zone sélectionnée (ZS) pour détecter la présence d'objets ;

un temps d'exécution (T) de l'étape de traitement (12) et de l'étape d'analyse (14) étant mesuré, et l'étape d'analyse (14) étant interrompue lorsque ce temps d'exécution (T) dépasse un niveau maximum (T1).

2. Procédé de détection (1) selon la revendication 1 dans lequel, après ladite interruption, une nouvelle étape de traitement (12) et une nouvelle étape d'analyse (14) sont mises en œuvre sur la base d'un nouveau nuage de points.

3. Procédé de détection (1) selon la revendication 1 ou 2, dans lequel, au cours de l'étape de division (6), le nuage de points filtré (NF) est divisé en régions circulaires (RC, **1RP,** 2RP) afin de former lesdites zones (Z).

4. Procédé de détection (1) selon l'une quelconque des revendications 1 à 3, dans lequel, au cours de l'étape de division (6), le nuage de points filtré (NF) est divisé en secteurs angulaires (SA, SR, 1SL, 2SL) environnants le véhicule (17) afin de former les zones (Z).

5. Procédé de détection (1) selon la revendication 4, dans lequel, au cours de l'étape de division (6), le nuage de points filtré (NF) est divisé afin de former les zones (Z), en au moins :

- un secteur angulaire avant (SA) du véhicule (17),
- un secteur angulaire arrière (SR) du véhicule (17),
- deux secteurs angulaire latéraux (1SL, 2SL) du véhicule (17).

6. Procédé de détection (1) selon l'une quelconque des revendications 1 à 5, dans lequel l'interruption de l'étape d'analyse (14) est conditionnée à un nombre (N) de zones analysées.

7. Procédé de détection (1) selon l'une quelconque des revendications 1 à 6, comprenant une étape d'analyse complémentaire (16) d'au moins une zone écartée (ZE) lors de l'étape de sélection (10) afin de détecter la présence d'objets au sein de cette zone écartée (ZE), ladite étape d'analyse complémentaire (16) étant effectuée lorsque le temps d'exécution (T) est inférieur à un niveau minimum (T2).

8. Procédé de détection (1) selon la revendication 7, dans lequel le niveau minimum (T2) est égal à la moitié du niveau maximum (T1).

9. Système de détection (36) de l'environnement d'un véhicule (17) mettant en œuvre le procédé de détection (1) selon l'une quelconque des revendications 1 à 8.

10. Programme d'ordinateur comprenant des instructions de code de programme pour l'exécution des étapes du procédé de détection (1) selon l'une quelconque des revendication 1 à 8, lorsque ledit programme d'ordinateur est exécuté sur un ou plusieurs processeurs.

[fig 1]

[fig 2]

[fig 3]

[fig 4]

# EP 4 764 609 A1

Europäisches
Patentamt

European
Patent Office

Office européen
des brevets

**RAPPORT DE RECHERCHE EUROPEENNE**

Numéro de la demande

EP 25 22 4118

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2022/214444 A1 (DAS SOUMYO [IN] ET AL) 7 juillet 2022 (2022-07-07) | 1-3,6,9, 10 | INV. G01S17/931 |
| Y | * alinéas [0002], [0021] - [0025], [0090] - [0091]; figure 7a * | 4,5,7,8 | G01S7/48 G01S7/487 |
| A | US 2023/368407 A1 (REN GUANGHUI [CN] ET AL) 16 novembre 2023 (2023-11-16) * alinéas [0086] - [0102]; figures 1-4 * | 1-10 | |
| A | US 2023/242160 A1 (SEN ABHISHEK [US] ET AL) 3 août 2023 (2023-08-03) * alinéa [0133]; figures 1-9 * | 1-10 | |
| Y | GAO GUOHUAN ET AL: "ADP3D: Adaptive Point Selection for Efficient Multi-frame 3D Object Detection", PROCEEDINGS OF THE ACM SIGGRAPH/EUROGRAPHICS SYMPOSIUM ON COMPUTER ANIMATION, ACMPUB27, NEW YORK, NY, USA, 3 décembre 2024 (2024-12-03), pages 1-7, XP059857292, DOI: 10.1145/3696409.3700280 ISBN: 979-8-4007-1281-4 | 7,8 | |
| | | | **DOMAINES TECHNIQUES RECHERCHES (IPC)** |
| | | | G01S |
| A | * le document en entier * | 1,9,10 | |
| Y | LI XIAOWEI ET AL: "Ground extraction and road obstacle segmentation method based on point cloud data", PROCEEDINGS OF THE SPIE, SPIE, US, vol. 12509, 12 janvier 2023 (2023-01-12), pages 125091F-125091F, XP060171392, ISSN: 0277-786X, DOI: 10.1117/12.2655864 ISBN: 978-1-5106-5738-0 * le document en entier * | 4,5 | |

Le présent rapport a été établi pour toutes les revendications

| Lieu de la recherche | Date d'achèvement de la recherche | Examinateur |
|---|---|---|
| Munich | 5 mai 2026 | Kern, Olivier |

EPO FORM 1503 03.82 (P04C02)

**EP 4 764 609 A1**

## ANNEXE AU RAPPORT DE RECHERCHE EUROPEENNE
## RELATIF A LA DEMANDE DE BREVET EUROPEEN NO.

EP 25 22 4118

05-05-2026

| Document brevet cité au rapport de recherche | Date de publication | Membre(s) de la famille de brevet(s) | | Date de publication |
|---|---|---|---|---|
| US 2022214444 A1 | 07-07-2022 | CN | 113853532 A | 28-12-2021 |
| | | JP | 7372350 B2 | 31-10-2023 |
| | | JP | 2022547766 A | 16-11-2022 |
| | | KR | 20220020369 A | 18-02-2022 |
| | | US | 2022214444 A1 | 07-07-2022 |
| | | WO | 2020250020 A1 | 17-12-2020 |
| US 2023368407 A1 | 16-11-2023 | CN | 114926814 A | 19-08-2022 |
| | | EP | 4279947 A1 | 22-11-2023 |
| | | US | 2023368407 A1 | 16-11-2023 |
| US 2023242160 A1 | 03-08-2023 | US | 2021253131 A1 | 19-08-2021 |
| | | US | 2023242160 A1 | 03-08-2023 |